# EUROPÄISCHE PATENTSCHRIFT

(11) **EP 4 581 292 B1**
(45) Veröffentlichungstag und Bekanntmachung des Hinweises auf die Patenterteilung: **20.05.2026**
(21) Anmeldenummer: 23764237.6
(22) Anmeldetag: 18.08.2023
(51) Int. Cl.: F16K 11/16, F16K 27/00, F16K 27/02, F16K 31/524

(54) **VENTILBLOCK, KÄLTEMITTELKREISLAUF UND VERFAHREN ZUM BETRIEB UND ZUR HERSTELLUNG**
VALVE BLOCK, COOLANT CIRCUIT AND METHOD FOR OPERATION AND PRODUCTION
BLOC DE SOUPAPES, CIRCUIT DE FLUIDE DE REFROIDISSEMENT ET PROCÉDÉ DE FONCTIONNEMENT ET DE PRODUCTION

(30) Priorität: 01.09.2022 DE 102022122207
(43) Veröffentlichungstag der Anmeldung: 09.07.2025
(73) Patentinhaber: ETO MAGNETIC GmbH, 78333 Stockach (DE)
(72) Erfinder: AURICH, Jörg, 09235 Burkhardtsdorf (DE); TRAPP, Leonhard, 13587 Berlin (DE); RINDT, Andreas, 10245 Berlin (DE); HOHMANN, Frank, 03226 Vetschau (DE)
(74) Vertreter: Daub, Thomas
(86) Internationale Anmeldenummer: PCT/EP2023/072846
(87) Internationale Veröffentlichungsnummer: WO 2024/046790

(56) Entgegenhaltungen:
- DE-A1- 102007 028 565
- DE-U1- 202017 001 550
- JP-A- 2007 170 521
- US-A1- 2017 328 311

## Beschreibung

### Stand der Technik

Die Erfindung betrifft einen Ventilblock nach dem Oberbegriff des Anspruchs 1, einen Kältemittelkreislauf nach Anspruch 14 und Verfahren nach den Oberbegriffen der Ansprüche und 16.

Ein Ventilblock gemäß dem Oberbegriff von Anspruch 1 ist aus der US 2017/328311 A1 bekannt.

Es ist bereits vorgeschlagen worden, dass Ventile, insbesondere Absperrventile in Kältemittelkreisläufen, separat voneinander und verteilt angeordnet sind und separat voneinander angesteuert werden, z.B. mittels einzelner Elektromagnete. Dazu ist eine hohe Anzahl von Aktuatoren, Verbindungsrohren, Verbindungsschläuchen und Dichtungen notwendig.

Die Aufgabe der Erfindung besteht insbesondere darin, eine gattungsgemäße Vorrichtung mit vorteilhaften Eigenschaften hinsichtlich einer Effizienz, insbesondere einer Herstellungseffizienz, bereitzustellen. Die Aufgabe wird erfindungsgemäß durch die Merkmale der Patentansprüche 1 und 14-16 gelöst, während vorteilhafte Ausgestaltungen und Weiterbildungen der Erfindung den Unteransprüchen entnommen werden können.

### Vorteile der Erfindung

Es wird ein Ventilblock zumindest für einen Kältemittelkreislauf, insbesondere in einem Fahrzeug, vorzugsweise in einem batterieelektrisch betriebenen Fahrzeug (BEV), und/oder in einer Wärmepumpe, vorzugsweise einer Gebäudewärmepumpe, mit zumindest einer Kältemittelventileinheit, aufweisend zumindest ein erstes Kältemittelventil und zumindest ein zweites Kältemittelventil, welche jeweils zumindest dazu vorgesehen sind, einen Kältemittelfluss des Kältemittelkreislaufs zu beeinflussen, und mit einer, insbesondere mechanischen, Ventilsteuereinheit, welche zumindest dazu vorgesehen ist, zumindest einen Teil der Kältemittelventile der Kältemittelventileinheit zu steuern und/oder vorzusteuern, wobei die Ventilsteuereinheit eine gezielt ansteuerbare Nockenwelle zur Ansteuerung mehrerer Kältemittelventile und/oder mehrerer Vorsteuerventile der Ventilsteuereinheit, insbesondere zumindest eines ersten Vorsteuerventils der Ventilsteuereinheit zu einer Vorsteuerung des ersten Kältemittelventils und zumindest eines zweiten Vorsteuerventils der Ventilsteuereinheit zu einer Vorsteuerung des zweiten Kältemittelventils, aufweist, vorgeschlagen. Dadurch kann vorteilhaft eine Effizienz, insbesondere eine Kosteneffizienz durch eine vergünstigte Herstellung und/oder durch eine Bauteilreduzierung gesteigert werden. Vorteilhaft kann eine Anzahl an Elektromagneten in einem Kältemittelkreislauf wesentlich verringert werden. Zudem kann vorteilhaft eine Effizienz einer Bauraumausnutzung gesteigert werden. Zudem kann, insbesondere durch eine gemeinsame Ansteuerung oder Vorsteuerung mehrerer Ventile, ein Stromverbrauch, insbesondere eines Kältemittelkreislaufs, reduziert werden, was insbesondere bei BEVs zu einer Reichweitenerhöhung beitragen kann. Zudem kann vorteilhaft ein Leckagerisiko und/oder ein Fehlerrisiko von Kältemittelkreisläufen reduziert werden, insbesondere indem eine Anzahl von Verbindungsstellen innerhalb des Kältemittelkreislaufs vorteilhaft reduziert werden kann.

Insbesondere umfasst der Ventilblock eine Mehrzahl an integrierten Ventilen und/oder Fluidleitungen, insbesondere Kältemittelleitungen. Insbesondere ist ein Kältemittelkreislauf zu einer Kühlung, insbesondere mittels Kühlluft, eines Raums, beispielsweise einer Fahrerkabine eines Fahrzeugs, insbesondere eines BEV, vorgesehen. Insbesondere bildet der Kältemittelkreislauf zumindest einen Teil einer Kältemaschine, insbesondere einer Klimaanlage, vorzugsweise einer Fahrzeugklimaanlage, oder einer Wärmepumpe, insbesondere einer Hauswärmepumpe oder einer Fahrzeugwärmepumpe, aus. Vorzugsweise ist der Kältemittelkreislauf in einer dem Fachmann bekannten Weise aufgebaut und umfasst insbesondere zumindest einen Verdampfer, einen Verflüssiger, einen Kompressor und/oder eine Drosseleinrichtung (Expansionsventil). Auf eine tiefergehende Erläuterung der Funktionsweise einer Kältemaschine und/oder eines Kältemittelkreislaufs wird an dieser Stelle verzichtet, da diese dem Fachmann wohlbekannt ist. Das Fahrzeug kann als ein Landfahrzeug, wie ein PKW, ein LKW, eine Baumaschine oder ein Zug, als ein Wasserfahrzeug, wie ein Schiff, ein Luftkissenfahrzeug oder ein Amphibienfahrzeug, oder als ein Luftfahrzeug, wie ein Flugzeug, ein Helikopter oder ein Luftschiff, ausgebildet sein. Der Kältemittelkreislauf kann zur Temperierung einer Fahrzeugführerkabine, beispielsweise ein Führerstand einer Lokomotive, eines Busses oder eines Baufahrzeugs, oder eines Fahrgastraums, beispielsweise eines Passagierwaggons, vorgesehen sein. Vorzugsweise ist das Fahrzeug als ein rein batteriebetriebenes Fahrzeug oder als ein Hybridfahrzeug ausgebildet. Alternativ kann der Kältemittelkreislauf für einen Einsatz in Gebäudewärmepumpen, insbesondere Hauswärmepumpen, vorgesehen sein. Weitere zusätzliche Anwendungen in anderweitig eingesetzten Kältemittelkreisläufen sind ebenfalls denkbar.

Unter dem Kältemittel soll insbesondere ein Fluid verstanden werden, welches Enthalpie von einem zu kühlenden Raum zu einer Umgebung außerhalb des zu kühlenden Raums transportiert. Der Unterschied zu einem Kühlmittel ist insbesondere der, dass das Kältemittel in dem Kältemittelkreislauf dies entgegen einem Temperaturgradienten tun kann, so dass unter Aufwendung von zugeführter Energie die Umgebungstemperatur sogar höher sein darf als die Temperatur des zu kühlenden Raums. Dagegen ist ein Kühlmittel lediglich in der Lage, in einem Kühlkreis die Enthalpie entlang des Temperaturgradienten zu einer Stelle niedrigerer Temperatur zu transportieren. Beispiele für Kältemittel sind Ammoniak, Kohlenstoffdioxid, Kohlenwasserstoffe, wie Isobutan, Propan oder Pentan, oder halogenierte Kohlenwasserstoffe.

Die Kältemittelventile der Kältemittelventileinheit sind insbesondere in ein gemeinsames Bauteil, insbesondere den Ventilblock oder ein Kältemittelventilmodul des Ventilblocks, integriert ausgebildet. Insbesondere sind die Kältemittelventile dazu vorgesehen, den Kältemittelfluss zu drosseln, abzusperren und/oder freizugeben. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Die Nockenwelle und/oder die Vorsteuerventile der Ventilsteuereinheit sind insbesondere in ein gemeinsames Bauteil, insbesondere den Ventilblock oder ein Ventilsteuermodul des Ventilblocks, integriert ausgebildet. Die Vorsteuerventile sind vorzugsweise verschieden von Magnetventilen. Die Vorsteuerventile sind vorzugsweise frei von einer eigenen (von der Nockenwelle unabhängigen) Ansteuerung ausgebildet. Insbesondere bildet die Ventilsteuereinheit eine Kältemittelventilvorsteuereinheit aus, welche vorzugsweise dazu vorgesehen ist, die Kältemittelventile der Kältemittelventileinheit vorzusteuern. Insbesondere ist die Ventilsteuereinheit rein mechanisch ausgebildet. Der Ventilblock kann auch frei von einer Vorsteuerung ausgebildet sein. In diesem Fall steuert die Nockenwelle die Kältemittelventile direkt an, während bei einer Integration einer Vorsteuerung die Nockenwelle die Vorsteuerventile direkt ansteuert, welche wiederum dann die Kältemittelventile ansteuern. Die Kältemittelventileinheit und die Ventilsteuereinheit können gemeinsam in einem einzelnen Ventilblock integriert ausgebildet sein oder in zwei separaten Ventilblockmodulen (Ventilsteuermodul und Kältemittelventilmodul), die nach einem Zusammenfügen den Ventilblock ausbilden. Dadurch könnte vorteilhaft eine Modularität der Ventilblockzusammensetzung erreicht werden. Darunter, dass die Nockenwelle "gezielt ansteuerbar" ist soll insbesondere verstanden werden, dass eine Rotationsposition der Nockenwelle gezielt und/oder wählbar einstellbar ist.

Insbesondere weist der Ventilblock eine Steuer- und/oder Regeleinheit auf. Die Steuer- und/oder Regeleinheit ist zumindest dazu vorgesehen, die Nockenwelle, insbesondere eine die Nockenwelle antreibende Elektromotoreinheit, gezielt anzusteuern. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einem Prozessor und mit einem Speicherelement sowie mit einem in dem Speicherelement gespeicherten Betriebsprogramm verstanden werden. Die Kältemittelventileinheit bildet insbesondere zumindest einen Teil des Kältemittelkreislaufs, vorzugsweise einen von einem Kältemittel des Kältemittelkreislaufs durchströmten Teil des Kältemittelkreislaufs aus. Der Kältemittelkreislauf ist vorzugsweise verschieden von einem Kühlmittelkreislauf ausgebildet. Der Kältemittelkreislauf ist vorzugsweise verschieden von einem rein hydraulischen Kreislauf ausgebildet. Der Kältemittelkreislauf ist vorzugsweise verschieden von einem rein pneumatischen Kreislauf ausgebildet. Der Kältemittelkreislauf ist vorzugsweise dazu vorgesehen, ein Fluid in zwei verschiedenen Aggregatszuständen (gasförmig und flüssig) zu führen.

Ferner wird vorgeschlagen, dass die Ventilsteuereinheit zumindest die Elektromotoreinheit, insbesondere mit zumindest einem Schrittmotor oder mit zumindest einem elektrisch kommutierten Gleichstrommotor, zu einem winkelgesteuerten Antrieb der Nockenwelle aufweist. Dadurch kann vorteilhaft eine Vielzahl von Schaltbildern des Ventilblocks gezielt angesteuert werden. Zudem kann vorteilhaft ein universeller Aufbau ermöglicht werden. Für eine veränderte Ventillogik des Ventilblocks müsste dann beispielsweise nur die Nockenwelle ausgetauscht werden. Insbesondere umfasst die Nockenwelle eine Mehrzahl an Nockenringen, welche jeweils Nocken zur Ansteuerung der Kältemittelventile und/oder der Vorsteuerventile aufweisen. Unter einem "winkelgesteuerten Antrieb" der Nockenwelle soll insbesondere verstanden werden, dass zumindest im Wesentlichen exakte Winkelstellungen der Nockenwelle mittels der Elektromotoreinheit einstellbar sind. Unter "im Wesentlichen exakt" soll in diesem Zusammenhang insbesondere eine Exaktheit der Winkeleinstellung der Nockenwelle von zumindest ±5°, vorzugsweise zumindest ±2,5° und bevorzugt von zumindest ±1° verstanden werden. Die Elektromotoreinheit kann ein Untersetzungsgetriebe aufweisen. Dadurch kann vorteilhaft eine Exaktheit der Ansteuerung vergrößert werden. Insbesondere bildet die Elektromotoreinheit eine zentrale Ansteuereinheit für zumindest einen Großteil der Kältemittelventile und/oder für die Vorsteuerventile aus.

Des Weiteren wird vorgeschlagen, dass die Nockenwelle zu einer Ansteuerung von mehr als zwei, vorzugsweise von mehr als drei und bevorzugt von mehr als vier Kältemittelventilen der Kältemittelventileinheit oder Vorsteuerventilen der Ventilsteuereinheit ausgebildet ist. Dadurch kann vorteilhaft eine Effizienz, insbesondere eine Kosteneffizienz durch eine vergünstigte Herstellung und/oder durch eine Bauteilreduzierung gesteigert werden.

Wenn sämtliche Kältemittelventile eines funktionsfähigen Kältemittelkreislaufs in dem / in den Ventilblock integriert sind, kann vorteilhaft eine Effizienz, insbesondere eine Kosteneffizienz durch eine vergünstigte Herstellung und/oder durch eine Bauteilreduzierung und/oder eine Bauraumeffizienz durch eine Bauraumreduzierung gesteigert werden. Ein Kältemittelventil kann durch ein Absperrventil und/oder durch ein Expansionsventil ausgebildet sein. Insbesondere sind sämtliche Absperrventile des funktionsfähigen Kältemittelkreislaufs in dem / in dem Ventilblock integriert. Insbesondere sind sämtliche Expansionsventile des funktionsfähigen Kältemittelkreislaufs in dem / in den Ventilblock integriert. Insbesondere sind zumindest zwei Kältemittelventile mit zueinander grundlegend verschiedenen Aufgaben und Funktionen in dem / in den Ventilblock integriert. Insbesondere sind zumindest ein Absperrventil und zumindest ein Expansionsventil in dem / in den Ventilblock integriert.

Zudem wird vorgeschlagen, dass die Vorsteuerventile der Ventilsteuereinheit oder die Kältemittelventile der Kältemittelventileinheit in einer Reihe parallel zu einer Rotationsachse der Nockenwelle und/oder in Umfangrichtung der Nockenwelle um die Rotationsachse der Nockenwelle herum angeordnet sind. Dadurch kann vorteilhaft eine hohe Effizienz, insbesondere Bauraumeffizienz erreicht werden. Vorteilhaft können alle entsprechenden Ventile gemeinsam von einer einzigen Nockenwelle bzw. von einer einzigen gezielt angesteuerten Elektromotoreinheit angesteuert / vorgesteuert werden.

Wenn das erste Kältemittelventil und/oder das zweite Kältemittelventil als ein Absperrventil zu einem, insbesondere kompletten, Sperren des Kältemittelflusses zumindest in einem Teilbereich des Kältemittelkreislaufs, insbesondere zumindest in einer Kältemittelleitung eines mehrere Kältemittelleitungen umfassenden Leitungssystems des Kältemittelkreislaufs, ausgebildet ist, kann vorteilhaft eine effiziente Ansteuerung und/oder Vorsteuerung der Absperrventile des Kältemittelkreislaufs erreicht werden. Die Absperrventile sind insbesondere alle verschieden von Magnetventilen ausgebildet. Die Absperrventile sind insbesondere frei von eigenen Ansteuerungen (abgesehen von einem ggf. jeweils zugeordneten Vorsteuerventil) ausgebildet. Insbesondere umfasst der Ventilblock mehr als zwei, vorzugsweise mehr als drei und bevorzugt mehr als vier Absperrventile. Ein Absperrventil ist insbesondere als eine Armatur zum kontrollierten Öffnen und/oder Schließen von Durchströmöffnungen des Leitungssystems des Kältemittelkreislaufs oder von Kältemittelleitungen des Leitungssystems des Kältemittelkreislaufs ausgebildet.

Wenn alternativ oder zusätzlich das erste Kältemittelventil, das zweite Kältemittelventil und/oder zumindest ein separat, insbesondere unabhängig von der Nockenwelle, angesteuertes drittes Kältemittelventil der Kältemittelventileinheit als ein Expansionsventil des Kältemittelkreislaufs ausgebildet ist/sind, kann vorteilhaft eine besonders vollständige Integration der für die Umsetzung eines Kältemittelkreislaufs nötigen Ventile in einen einzelnen Ventilblock erreicht werden. Vorteilhaft kann eine Kosteneffizienz, eine Bauteileffizienz und/oder eine Bauraumeffizienz verbessert werden. Das Expansionsventil bildet insbesondere eine Einrichtung aus, die durch eine lokale Verengung eines Strömungsquerschnitts einer Kältemittelleitung des Leitungssystems des Kältemittelkreislaufs einen Druck des durchfließenden Kältemittels vermindert und damit eine Volumenzunahme bzw. Expansion des Kältemittels bewirkt. Das Expansionsventil kann als geregeltes Expansionsventil ausgebildet sein. Häufig tritt das Kältemittel in Kühlkreisläufen als nahezu siedende Flüssigkeit in das Expansionsventil ein und erfährt dann in dem Expansionsventil eine in erster Näherung als adiabat isenthalpe Zustandsänderung, wobei insbesondere ein Teil des Kältemittels beim Durchgang durch das Expansionsventil verdampft, während ein anderer Teil des Kältemittels im flüssigen Zustand verbleibt. Das/die, insbesondere in den Ventilblock integrierte/n, Expansionsventil/e kann/können separat (unabhängig von der Nockenwelle) angesteuert sein. Alternativ ist jedoch auch denkbar, dass das/die Expansionsventil/e (ebenfalls) von der Nockenwelle oder von einer weiteren Nockenwelle angesteuert sind/werden.

Wenn dabei die Nockenwelle zumindest einen Nockenring mit einer eine flache Rampe ausbildenden Nocke aufweist, kann vorteilhaft eine feine Ansteuerung des Expansionsventils über die Nockenwelle ermöglicht werden. Insbesondere steigt die flache Rampe in Umfangsrichtung der Nocke zunächst stetig und flach an. Nach einem Maximum kann die flache Rampe in Umfangsrichtung der Nocke wieder stetig und flach abfallen. Insbesondere ist in diesem Fall auch die Elektromotoreinheit zur Ermöglichung der feinen Abstimmung der Einstellung des Expansionsventils über die Nockenwelle besonders präzise und fein ansteuerbar.

Außerdem wird vorgeschlagen, dass die Nockenwelle eine Mehrzahl an Nockenringen aufweist, welche jeweils zumindest zu einer Ansteuerung zumindest eines Kältemittelventils oder zumindest eines Vorsteuerventils vorgesehen sind, wobei die Anordnung der Nockenringe an der Nockenwelle eine Mehrzahl an spezifischen Schaltbildern zu einer Schaltung verschiedener Betriebszustände des Kältemittelkreislaufs ausbildet. Dadurch kann vorteilhaft eine hohe Flexibilität erreicht werden. Vorteilhaft kann eine einfache und zuverlässige Einstellung auch von komplizierten Schaltbildern ermöglicht werden. Zudem kann vorteilhaft ein universeller Aufbau ermöglicht werden, wobei für eine Veränderung einer Ventillogik vorteilhaft nur ein Austausch der Nockenwelle erforderlich ist. Als Nockenring soll insbesondere ein Teil der Nockenwelle verstanden werden, welcher in axiale Richtung gesehen zumindest im Umfang der Nockenwelle zumindest im Wesentlichen gleichförmig ausgebildet ist. Insbesondere umfasst jeder Nockenring zumindest eine Nocke, welche zur Ansteuerung zumindest eines Kältemittelventils oder zumindest eines Vorsteuerventils vorgesehen ist. Insbesondere bildet die Nocke von der Rotationsachse gesehen eine Erhebung in Radialrichtung aus. Insbesondere bildet die Nockenwelle je nach Drehposition, zumindest zwei, vorzugsweise mehr als zwei, bevorzugt mehr als drei und besonders bevorzugt mehr als vier, verschiedene spezifische Schaltbilder zur Schaltung verschiedener Betriebszustände des Kältemittelkreislaufs aus. Jedes Schaltbild entspricht dabei einer unterschiedlichen Schaltkombination aller durch die Nockenwelle gesteuerten Kältemittelventile und/oder Vorsteuerventile.

Wenn die Nockenwelle eine Anzahl an Nockenringen aufweist, welche kleiner ist als eine Anzahl an Vorsteuerventilen der Ventilsteuereinheit, die von der Nockenwelle angesteuert werden, und/oder als eine Anzahl an Kältemittelventilen der Kältemittelventileinheit, die von der Nockenwelle angesteuert werden, kann vorteilhaft ein besonders kompakter Aufbau ermöglicht werden. Vorteilhaft kann die Nockenwelle besonders kurz ausgestaltet werden. Insbesondere kann die Anzahl an Nockenringen in diesem Fall kleiner sein als die Gesamtzahl an Ventilen (Vorsteuerventile und Kältemittelventile) die von der Nockenwelle angesteuert werden.

Wenn alternativ oder zusätzlich die Nockenwelle einen Nockenring aufweist, welcher zu einer Ansteuerung von zwei oder mehr unterschiedlichen Vorsteuerventilen oder von zwei oder mehr unterschiedlichen Kältemittelventilen vorgesehen ist, kann vorteilhaft ein besonders kompakter Aufbau ermöglicht werden. Vorteilhaft kann die Nockenwelle besonders kurz ausgestaltet werden. Dabei ist denkbar, dass eine Nocke / eine Erhebung des Nockenrings sich über einen größeren Teil der Umfangsrichtung der Nockenwelle erstreckt um je nach Stellung der Nockenwelle mit keinem, mit einem oder mit mehr als einem Ventil wechselzuwirken. Dabei ist ebenfalls denkbar, dass der Nockenring entlang seiner Umfangsrichtung zwei oder mehr separate Nocken / Erhebungen aufweist die je nach Stellung der Nockenwelle jeweils mit einem Ventil wechselwirken oder nicht. Auch können mehrere Nocken / Erhebungen eines Nockenrings unterschiedlich breit (in Umfangsrichtung gesehen) ausgebildet sein.

Ferner wird vorgeschlagen, dass jedes Vorsteuerventil der Ventilsteuereinheit mit dem jeweiligen zugehörigen Kältemittelventil zumindest über einen Steuerkanal, insbesondere fluidtechnisch, verbunden ist. Dadurch kann eine einfache und/oder effiziente (elektronikfreie) Vorsteuerung der Kältemittelventile erreicht werden. Vorteilhaft kann durch eine Vorsteuerung der Kältemittelventile mittels der Vorsteuerventile eine hohe Energieeffizienz erreicht werden. Zudem kann dadurch erreicht werden, dass die für die Ansteuerung der Kältemittelventile nötige Kraft gering gehalten werden kann. Dadurch können vorteilhaft kompakte und/oder energiesparende die Nockenwelle antreibende Elektromotoreinheiten eingesetzt werden. Der Steuerkanal kann als eine Steuerbohrung ausgeführt sein oder eine beliebige andere Form, einen beliebigen anderen Verlauf oder einen beliebigen anderen Querschnitt als eine Bohrung aufweisen.

Wenn zudem jedes Vorsteuerventil der Ventilsteuereinheit mit demselben jeweiligen zugehörigen Kältemittelventil zumindest über einen weiteren Steuerkanal, insbesondere fluidtechnisch, verbunden ist kann vorteilhaft eine einfache und/oder effiziente (elektronikfreie) Vorsteuerung der Kältemittelventile erreicht werden. Insbesondere sind die Vorsteuerventile über die Steuerkanäle (indirekt) an den Kältemittelkreislauf angeschlossen. Insbesondere werden die internen Drücke des Kältemittelkreislaufs zur Übertragung der von der Nockenwelle aufgenommenen Vorsteuerungsbewegung von dem Vorsteuerventil zu dem zugehörigen Kältemittelventil verwendet. Insbesondere wird über den Steuerkanal der interne Druck des Kältemittelkreislaufs an das Vorsteuerventil übertragen während über der weitere Steuerkanal der Druck des Vorsteuerventils (d.h. bei geöffnetem Vorsteuerventil der über den Steuerkanal an das Vorsteuerventil übertragene interne Druck des Kältemittelkreislaufs) an das Kältemittelventil, insbesondere an eine der Stößelseiten des Kältemittelventils, weiterübertragen wird.

Des Weiteren wird vorgeschlagen, dass jedes Vorsteuerventil zumindest ein Übertragungselement aufweist, welches dazu vorgesehen ist, ein Nockenwellensignal mechanisch an ein Ventilelement des jeweiligen Vorsteuerventils zu übertragen. Dadurch kann vorteilhaft eine einfache und/oder effiziente (elektronikfreie) Vorsteuerung ermöglicht werden. Insbesondere ist das Übertragungselement als Stift, z.B. ein Zylinderstift, oder als ein Stößel ausgebildet. Insbesondere steht das Übertragungselement in Berührungskontakt mit der Nockenwelle. Insbesondere ist das Übertragungselement dazu vorgesehen von einer Nocke der Nockenwelle in Längsrichtung verschoben zu werden. Das Übertragungselement kann fest mit dem Ventilelement verbunden oder getrennt von dem Ventilelement ausgebildet sein. Das Ventilelement ist insbesondere durch einen Ventilschieber ausgebildet. Das Ventilelement ist insbesondere dazu vorgesehen einen Ventilsitz öffenbar abzudichten. Beispielsweise kann das Ventilelement als eine Dichtkugel ausgebildet sein, die dazu vorgesehen ist auf einem eine runde Öffnung ausbildenden Ventilsitz aufzusitzen. Bei einer direkten Ansteuerung der Kältemittelventile durch die Nockenwelle ohne die Verwendung von Vorsteuerventilen kann das Übertragungselement und/oder das Ventilelement einem der Kältemittelventile zugeordnet sein.

Weiterhin wird vorgeschlagen, dass die Vorsteuerventile als Normally-Closed-Ventile ausgebildet sind. Dadurch kann vorteilhaft eine hohe Energieeffizienz erreicht werden. Insbesondere umfasst das Vorsteuerventil eine Rückstelleinheit, welche dazu vorgesehen ist, das Ventilelement selbsttätig in den geschlossenen Zustand (d.h. den auf dem Ventilsitz aufsitzenden Zustand) zurückzustellen. Die Rückstelleinheit kann beispielsweise durch eine Spiraldruckfeder gebildet sein.

Zudem wird vorgeschlagen, dass der Ventilblock zumindest einen integrierten Druck-/Temperatursensor aufweist. Dadurch kann vorteilhaft eine Effizienz, insbesondere eine Kosteneffizienz und/oder eine Bauraumausnutzungseffizienz gesteigert werden. Insbesondere kann der Druck-/Temperatursensor dazu vorgesehen sein Daten zu liefern, die eine präzise Ansteuerung der Expansionsventile ermöglichen. Insbesondere kann der Druck-/Temperatursensor dazu vorgesehen sein Daten zu liefern, die eine geeignete Ansteuerung der Nockenwelle, insbesondere der einzelnen Schaltbilder der Nockenwelle, ermöglichen. Insbesondere ist der Druck-/Temperatursensor dazu vorgesehen, einen Druck und/oder eine Temperatur des Kältemittels an zumindest einem oder an mehreren Stellen des Kältemittelkreislaufs zu ermitteln.

Ferner wird ein Kältemittelkreislauf, insbesondere in einem Fahrzeug, vorzugsweise in einem batterieelektrisch betriebenen Fahrzeug, und/oder in einer Wärmepumpe, vorzugsweise einer Gebäudewärmepumpe, aufweisend den Ventilblock vorgeschlagen. Dadurch kann vorteilhaft eine Effizienz, insbesondere eine Kosteneffizienz durch eine vergünstigte Herstellung und/oder durch eine Bauteilreduzierung gesteigert werden. Vorteilhaft kann eine Anzahl an Elektromagneten in einem Kältemittelkreislauf wesentlich verringert werden. Zudem kann vorteilhaft eine Effizienz einer Bauraumausnutzung gesteigert werden.

Des Weiteren wird ein Verfahren zu einem Betrieb des Kältemittelkreislaufs vorgeschlagen, wobei in zumindest einem Betriebsschritt die gezielt ansteuerbare Nockenwelle zur Ansteuerung von mehreren in den gemeinsamen Ventilblock integrierten Kältemittelventilen und/oder von mehreren in den gemeinsamen Ventilblock integrierten Vorsteuerventilen zur Vorsteuerung der in den gemeinsamen Ventilblock integrierten Kältemittelventile verwendet wird. Dadurch kann vorteilhaft eine Effizienz, insbesondere eine Kosteneffizienz durch eine vergünstigte Herstellung und/oder durch eine Bauteilreduzierung gesteigert werden. Vorteilhaft kann eine Anzahl an Elektromagneten in einem Kältemittelkreislauf wesentlich verringert werden. Zudem kann vorteilhaft eine Effizienz einer Bauraumausnutzung gesteigert werden.

Außerdem wird ein Verfahren zu einer Herstellung des Ventilblocks vorgeschlagen, wobei in zumindest einem Herstellungsschritt mehrere Kältemittelventile und vorzugsweise mehrere Vorsteuerventile zur Vorsteuerung der Kältemittelventile, in einen gemeinsamen Ventilblock integriert werden. Dadurch kann vorteilhaft eine Effizienz, insbesondere eine Kosteneffizienz durch eine vergünstigte Herstellung und/oder durch eine Bauteilreduzierung gesteigert werden. Vorteilhaft kann eine Anzahl an Elektromagneten in einem Kältemittelkreislauf wesentlich verringert werden. Zudem kann vorteilhaft eine Effizienz einer Bauraumausnutzung gesteigert werden. Die in den gemeinsamen Ventilblock integrierten Kältemittelventile und/oder Vorsteuerventile haben alle jeweils keine eigene separate Steuerung.

Der erfindungsgemäße Ventilblock, der erfindungsgemäße Kältemittelkreislauf und die erfindungsgemäßen Verfahren sollen hierbei nicht auf die oben beschriebene Anwendung und Ausführungsform beschränkt sein. Insbesondere können der erfindungsgemäße Ventilblock, der erfindungsgemäße Kältemittelkreislauf und die erfindungsgemäßen Verfahren zu einer Erfüllung einer hierin beschriebenen Funktionsweise eine von einer hierin genannten Anzahl von einzelnen Elementen, Verfahrensschritten, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1a: eine schematische Darstellung eines Fahrzeugs mit einer Klimaanlage, die einen Kältemittelkreislauf mit einem erfindungsgemäßen Ventilblock aufweist,
- Fig. 1b: eine schematische Darstellung eines Gebäudes mit einer Wärmepumpe, die den Kältemittelkreislauf mit dem erfindungsgemäßen Ventilblock aufweist,
- Fig. 2a: eine schematische Darstellung des Ventilblocks in einer ersten Außenansicht,
- Fig. 2b: eine schematische Darstellung des Ventilblocks in einer zweiten Außenansicht,
- Fig. 3a: eine schematische Oberansicht des Ventilblocks,
- Fig. 3b: einen Schnitt durch den Ventilblock entlang einer in der Fig. 3a gekennzeichneten Schnittachse A,
- Fig. 4a: eine schematische Oberansicht des Ventilblocks,
- Fig. 4b: einen Schnitt durch den Ventilblock entlang einer in der Fig. 4a gekennzeichneten Schnittachse B mit einem integrierten Kältemittelventil in einem geschlossenen Zustand,
- Fig. 4c: einen Schnitt durch den Ventilblock entlang einer in der Fig. 4a gekennzeichneten Schnittachse B mit dem integrierten Kältemittelventil in einem geöffneten Zustand,
- Fig. 5a: eine schematische Darstellung einer Nockenwelle des Ventilblocks,
- Fig. 5b: ein schematisches Schaltbildschema der Nockenwelle des Ventilblocks,
- Fig. 6: ein schematisches Ablaufdiagramm eines Verfahrens zu einem Betrieb des Kältemittelkreislaufs,
- Fig. 7: ein schematisches Ablaufdiagramm eines Verfahrens zu einer Herstellung des Ventilblocks,
- Fig. 8a: eine schematische Darstellung einer alternativen Nockenwelle eines alternativen Ventilblocks in einer ersten Ansicht,
- Fig. 8b: eine schematische Darstellung einer alternativen Nockenwelle eines alternativen Ventilblocks in einer zweiten Ansicht
- Fig. 8c: eine schematische Darstellung einer weiteren alternativen Nockenwelle des alternativen Ventilblocks in der ersten Ansicht und
- Fig. 9: eine nicht erfindungsgemäße weitere Ausgestaltung von Absperrventilen.

### Beschreibung der Ausführungsbeispiele

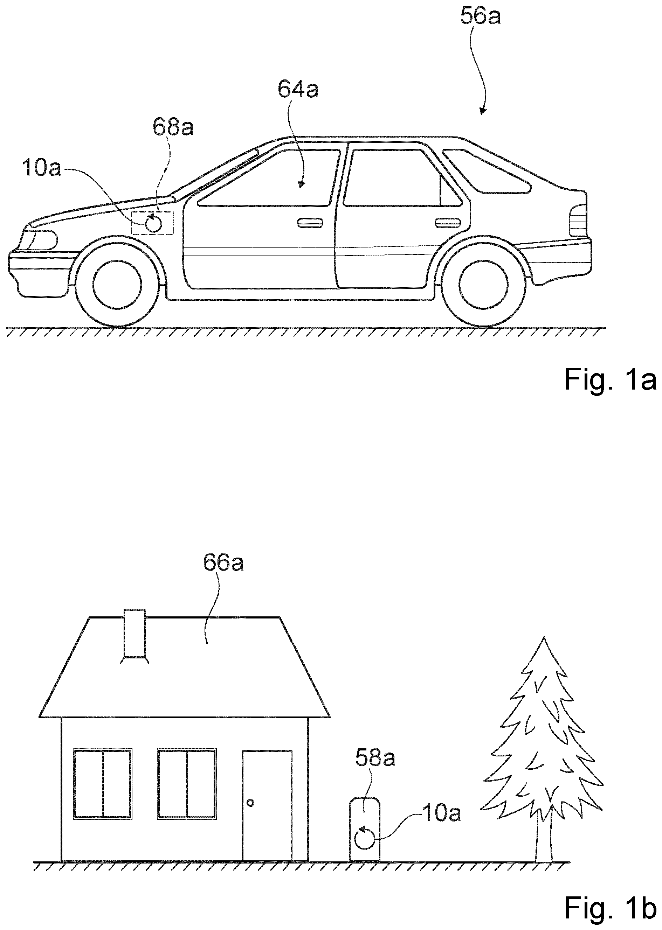

Die Figuren 1a und 1b zeigen schematisch ein Fahrzeug 56a mit einer einen erfindungsgemäßen Kältemittelkreislauf 10a aufweisenden Klimaanlage 68a zur Kühlung eines Passagierraums 64a des Fahrzeugs 56a bzw. ein Gebäude 66a mit einer, den erfindungsgemäßen Kältemittelkreislauf 10a aufweisenden Wärmepumpe 58a zur Kühlung der Räume des Gebäudes 66a. Der Kältemittelkreislauf 10a ist zu einem Transport eines Kältemittels vorgesehen. Der Kältemittelkreislauf 10a ist zu einem Transport von Wärmeenergie entgegen einem Temperaturgradienten vorgesehen.

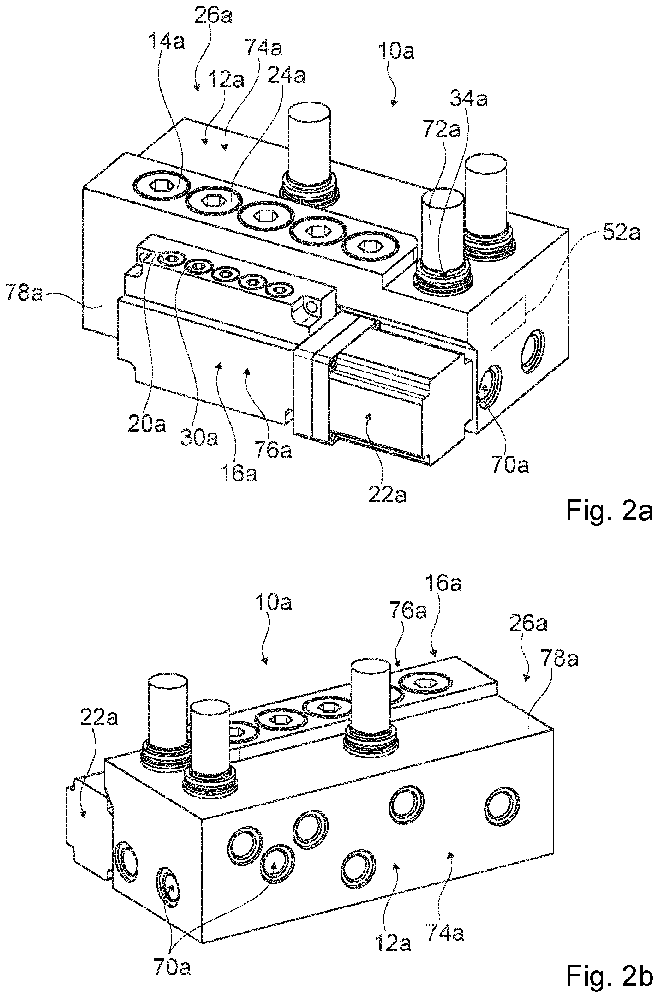

Der Kältemittelkreislauf 10a umfasst einen Ventilblock 26a. Der Ventilblock 26a ist in den Figuren 2a und 2b schematisch in einer Außenansicht dargestellt. Der Ventilblock 26a umfasst eine Mehrzahl an Anschlüssen 70a zum Anschluss an ein (nicht dargestelltes) Leitungssystem des Kältemittelkreislaufs 10a. Der Ventilblock 26a weist einen integrierten Druck-/Temperatursensor 52a auf. Der Ventilblock 26a kann optional zusätzlich zu dem Druck-/Temperatursensor 52a weitere integrierte Druck-Temperatursensoren aufweisen.

Der Ventilblock 26a weist eine Kältemittelventileinheit 12a auf. Die Kältemittelventileinheit 12a umfasst ein erstes Kältemittelventil 14a. Das erste Kältemittelventil 14a ist dazu vorgesehen, den Kältemittelfluss des Kältemittelkreislaufs 10a zu beeinflussen. Das erste Kältemittelventil 14a ist als ein Absperrventil ausgebildet. Absperrventile sind zu einem Sperren eines Kältemittelflusses in einem Teilbereich des Kältemittelkreislaufs 10a ausgebildet.

Die Kältemittelventileinheit 12a umfasst ein zweites Kältemittelventil 24a. Das zweite Kältemittelventil 24a ist als ein Absperrventil ausgebildet. Die Kältemittelventileinheit 12a umfasst ein drittes Kältemittelventil 34a. Das dritte Kältemittelventil 34a ist als ein Expansionsventil ausgebildet. Das Expansionsventil ist zu einer Drosselung eines Flussquerschnitts des Kältemittelflusses in einem Teilbereich des Kältemittelkreislaufs 10a vorgesehen. Das dritte Kältemittelventil 34a ist separat ansteuerbar. Das dritte Kältemittelventil 34a umfasst einen Elektromagneten 72a zu einer Ansteuerung eines Drosselzustands des Expansionsventils. Der in der Fig. 2 beispielhaft dargestellte Ventilblock 26a weist weitere Absperrventile und weitere Expansionsventile auf, welche nicht mit einem Bezugszeichen versehen sind. Insgesamt weist der gezeigte Ventilblock 26a acht Kältemittelventile 14a, 24a auf, welche durch fünf Absperrventile und drei Expansionsventile gebildet sind. Die Kältemittelventile 14a, 24a sind alle in den Ventilblock 26a integriert. Der Ventilblock 26a umfasst ein Kältemittelventilmodul 74a. Alle Kältemittelventile 14a, 24a, 34a des Ventilblocks 26a sind in dem Kältemittelventilmodul 74a angeordnet.

Der Ventilblock 26a umfasst eine Ventilsteuereinheit 16a. Die Ventilsteuereinheit 16a ist beispielhaft als eine Ventilvorsteuereinheit ausgebildet. Alternativ könnte der Ventilblock auch komplett ohne Vorsteuerfunktion ausgebildet sein wodurch die Kältemittelventile 14a, 24a direkt angesteuert werden würden. Die Ventilsteuereinheit 16a ist zu einer mechanischen Ansteuerung oder zu einer mechanischen Vorsteuerung der Kältemittelventile 14a, 24a vorgesehen. Die Ventilsteuereinheit 16a umfasst ein erstes Vorsteuerventil 20a. Das erste Vorsteuerventil 20a ist zu einer Vorsteuerung des ersten Kältemittelventils 14a vorgesehen. Die Ventilsteuereinheit 16a umfasst ein zweites Vorsteuerventil 30a. Das zweite Vorsteuerventil 30a ist zu einer Vorsteuerung des zweiten Kältemittelventils 24a vorgesehen. Die Vorsteuerventile 20a, 30a sind jeweils als Normally-Closed-Ventile ausgebildet.

Die Ventilsteuereinheit 16a umfasst eine Nockenwelle 18a. Die Nockenwelle 18a ist gezielt ansteuerbar. Die Nockenwelle 18a ist zu einer Ansteuerung mehrerer Vorsteuerventile 20a, 30a der Ventilsteuereinheit 16a vorgesehen, insbesondere zumindest des ersten Vorsteuerventils 20a und des zweiten Vorsteuerventils 30a, vorgesehen. Die Nockenwelle 18a könnte alternativ auch zu einer direkten Ansteuerung mehrerer Kältemittelventile 14a, 24a der Kältemittelventileinheit 12a, insbesondere zumindest des ersten Kältemittelventils 14a und des zweiten Kältemittelventils 24a, vorgesehen sein. Die Ventilsteuereinheit 16a umfasst eine Elektromotoreinheit 22a. Die Elektromotoreinheit 22a umfasst einen Schrittmotor. Die Elektromotoreinheit 22a ist zu einem präzisen drehwinkelgesteuerten Antrieb der Nockenwelle 18a / zu einer präzisen Drehwinkeleinstellung der Nockenwelle 18a vorgesehen. Der Ventilblock 26a umfasst ein Steuermodul 76a. Das Steuermodul 76a ist als ein Vorsteuermodul ausgebildet. Alle Vorsteuerventile 20a, 30a des Ventilblocks 26a sind in dem Steuermodul 76a angeordnet. Die Nockenwelle 18a ist in dem Steuermodul 76a angeordnet. Die Elektromotoreinheit 22a ist an dem Steuermodul 76a befestigt. Das Steuermodul 76a und das Kältemittelventilmodul 74a sind miteinander verbunden und bilden dadurch den Ventilblock 26a aus.

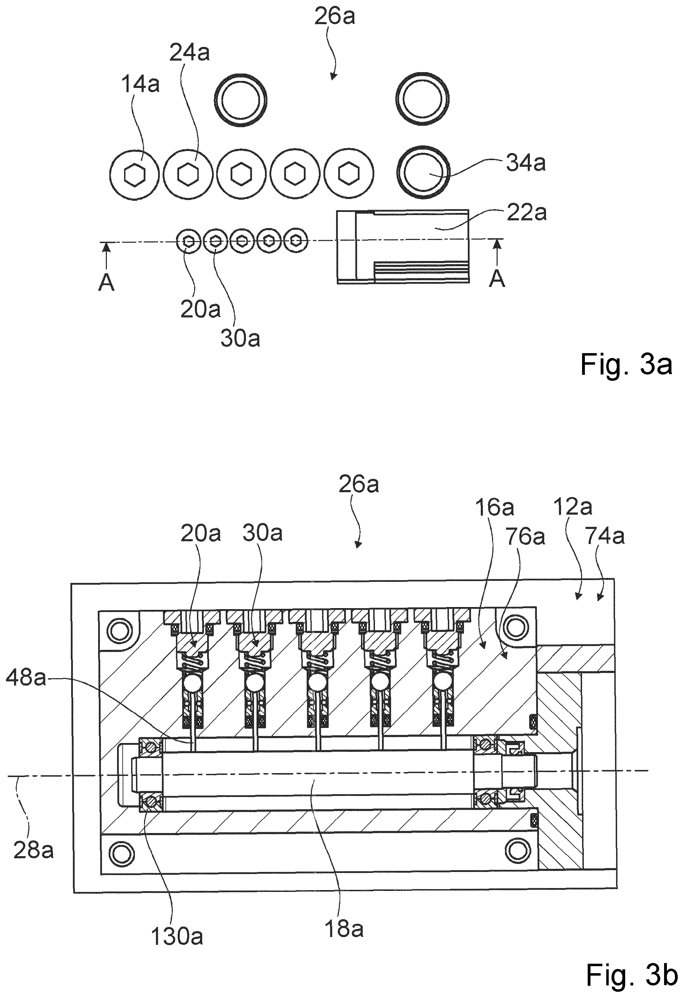

Die Figur 3b zeigt schematisch einen Schnitt durch den Ventilblock 26a entlang einer in der Fig. 3a gekennzeichneten Schnittachse A. Die Nockenwelle 18a ist in der Fig. 3b vereinfach ohne Nocken 40a dargestellt. Die Nockenwelle 18a ist zu einer Ansteuerung von mehr als zwei Vorsteuerventilen 20a, 30a vorgesehen. Die dargestellte Nockenwelle 18a ist beispielhaft zu einer Ansteuerung von fünf Vorsteuerventilen 20a, 30a vorgesehen, wobei jedes der Vorsteuerventile 20a, 30a ein eigenes als Absperrventil ausgebildetes Kältemittelventil 14a, 24a vorsteuert. Die Nockenwelle 18a ist um eine Rotationsachse 28a rotierbar gelagert. Der Ventilblock 26a weist beispielhaft Rillenkugellager 130a zur rotierbaren Lagerung der Nockenwelle 18a auf. Alternativ wäre auch ein Gleitlager für die rotierbare Lagerung der Nockenwelle 18a denkbar. Die Vorsteuerventile 20a, 30a der Ventilsteuereinheit 16a sind in einer Reihe parallel zu der Rotationsachse 28a der Nockenwelle 18a angeordnet. Die als Absperrventile ausgebildeten Kältemittelventile 14a, 24a der Kältemittelventileinheit 12a sind ebenfalls in einer Reihe parallel zu der Rotationsachse 28a der Nockenwelle 18a angeordnet (vgl. auch Figuren 2a oder 3a).

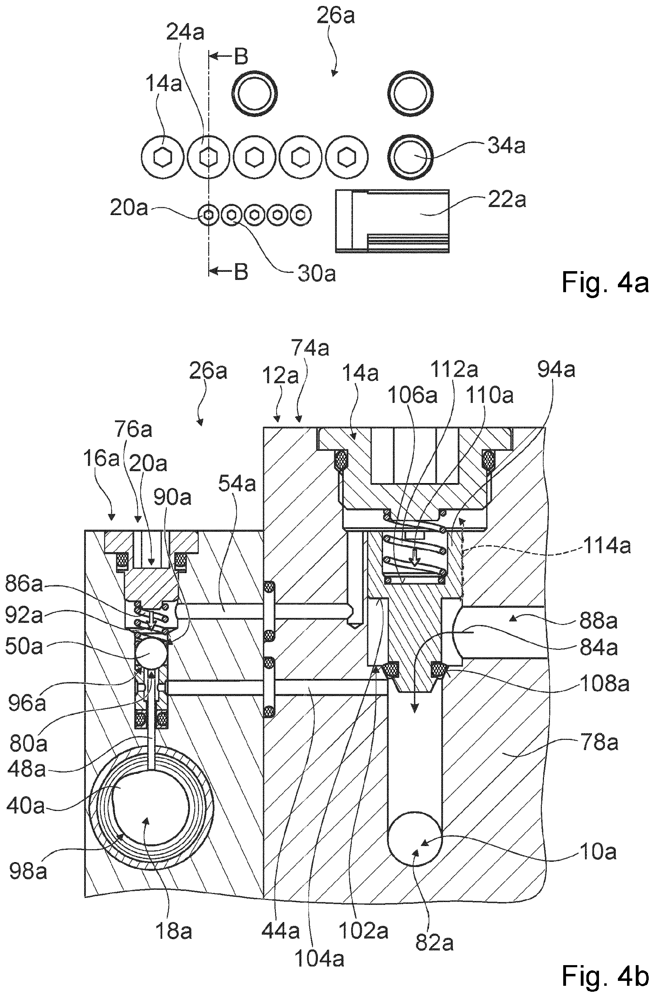

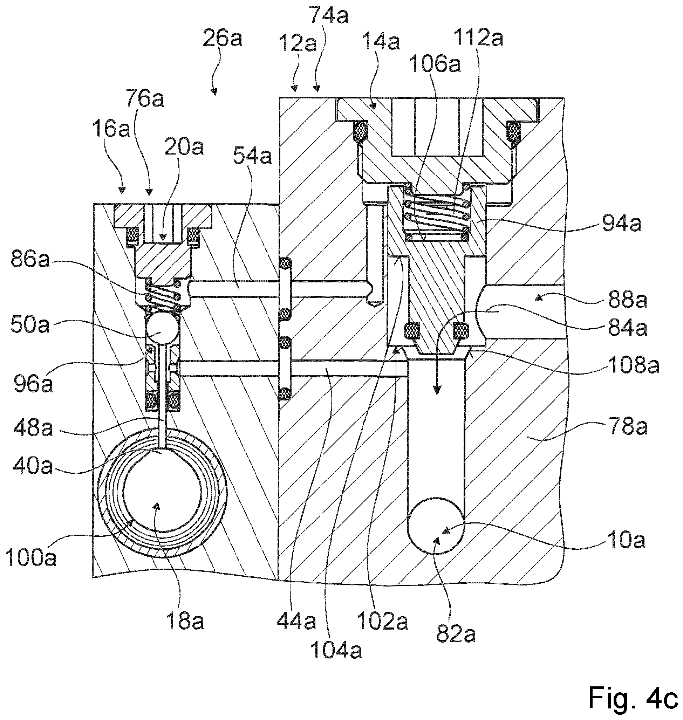

Die Figuren 4b und 4c zeigen schematisch einen Schnitt durch den Ventilblock 26a entlang einer in der Fig. 4a gekennzeichneten Schnittachse B. Das erste Vorsteuerventil 20a und das erste Kältemittelventil 14a sind in den Figuren 4b und 4c jeweils geschnitten dargestellt. Das erste Vorsteuerventil 20a weist ein Ventilelement 50a auf. Das Ventilelement 50a ist dazu vorgesehen, bei einem Aufsitzen auf einen Dichtsitz 96a des ersten Vorsteuerventils 20a eine erste Druckseite 80a und eine zweite Druckseite 90a des ersten Vorsteuerventils 20a fluidtechnisch zu trennen (vgl. Fig. 4b). Wenn das Ventilelement 50a jedoch von dem Dichtsitz 96a des ersten Vorsteuerventils 20a abgehoben ist sind die beiden Druckseiten 80a, 90a des ersten Vorsteuerventils 20a miteinander fluidtechnisch verbunden (vgl. Fig. 4c). Das erste Vorsteuerventil 20a weist eine Rückstelleinheit 86a auf. Die Rückstelleinheit 86a des ersten Vorsteuerventils 20a ist durch eine Spiraldruckfeder gebildet. Die Rückstelleinheit 86a des ersten Vorsteuerventils 20a ist dazu vorgesehen, das Ventilelement 50a in auf den Dichtsitz 96a des ersten Vorsteuerventils 20a zu bewegen / zu pressen. Das erste Vorsteuerventil 20a weist ein Übertragungselement 48a auf. Das Übertragungselement 48a ist als ein Zylinderstift ausgebildet. Das Übertragungselement 48a ist dazu vorgesehen, ein Nockenwellensignal der Nockenwelle 18a mechanisch an das Ventilelement 50a des ersten Vorsteuerventils 20a zu übertragen. Das Nockenwellensignal erzeugt eine Bewegung des Übertragungselements 48a in Richtung des Ventilelements 50a. Das Übertragungselement 48a steht in Berührungskontakt mit dem Ventilelement 50a des ersten Vorsteuerventils 20a und mit der Nockenwelle 18a. Das Übertragungselement 48a ist derart ausgebildet, dass es bei einer (in der Fig. 4b dargestellten) ersten Rotationsstellung 98a der Nockenwelle 18a ein Abdichten des Dichtsitzes 96a des ersten Vorsteuerventils 20a zulässt. In der ersten Rotationsstellung 98a der Nockenwelle 18a ist ein dem ersten Vorsteuerventil 20a zugeordneter Nockenring 36a derart eingestellt, dass keine Nocke 40a des Nockenrings 36a in Kontakt mit dem Übertragungselement 48a ist.

Das Übertragungselement 48a ist derart ausgebildet, dass es bei einer (in der Fig. 4c dargestellten) zweiten Rotationsstellung 100a der Nockenwelle 18a ein Abdichten des Dichtsitzes 96a des ersten Vorsteuerventils 20a verhindert. In der zweiten Rotationsstellung 100a der Nockenwelle 18a ist der dem ersten Vorsteuerventil 20a zugeordnete Nockenring 36a derart eingestellt, dass die Nocke 40a des Nockenrings 36a in Kontakt mit dem Übertragungselement 48a ist und dadurch das Ventilelement 50a über das Übertragungselement 48a aus dem Dichtsitz 96a angehoben wird.

Das erste Kältemittelventil 14a weist ein Schieberelement 94a auf. Das Schieberelement 94a weist eine Dichtfläche 108a auf. Das Schieberelement 94a ist dazu vorgesehen, bei einem Aufsitzen der Dichtfläche 108a auf einen Dichtsitz 102a des ersten Kältemittelventils 14a einen Eingang 88a und einen Ausgang 82a des ersten Kältemittelventils 14a fluidtechnisch zu trennen (vgl. Fig. 4b). Der Eingang 88a ist im in der Figur 4b dargestellten geschlossenen Zustand des ersten Kältemittelventils 14a fluidtechnisch mit einer ersten Druckwirkfläche 104a des ersten Kältemittelventils 14a verbunden. Über eine Leckage 114a des Schieberelements 94a ist in dem in der Figur 4b dargestellten geschlossenen Zustand des ersten Kältemittelventils 14a auch eine zweite Druckwirkfläche 106a des Schieberelements 94a, die der ersten Druckwirkfläche 104a des Schieberelements 94a gegenüberliegend angeordnet ist fluidtechnisch mit dem Eingang 88a verbunden, bzw. es liegen in diesem Zustand zumindest dieselben Drücke an beiden Druckwirkflächen 104a, 106a des Schieberelements 94a an. Beide Druckwirkflächen 104a, 106a des Schieberelements 94a liegen von der Dichtfläche 108a des Schieberelements 94a aus gesehen auf derselben Seite der Dichtfläche 108a. Die erste Druckwirkfläche 104a weist eine kleinere Oberfläche auf als die zweite Druckwirkfläche 106a. Dadurch wird das Schieberelement 94a in dem in der Fig. 4b dargestellten geschlossenen Zustand auf den Dichtsitz 102a gepresst. Dies wird durch den Pfeil 110a in der Fig. 4b verdeutlicht. Zusätzlich weist das erste Kältemittelventil 14a eine Rückstelleinheit 112a auf, welche als Spiraldruckfeder ausgebildet ist und ebenfalls das Schieberelement 94a in auf den Dichtsitz 102a presst.

In dem geschlossenen Zustand der Figur 4b ist der Eingang 88a des als Absperrventil ausgebildeten ersten Kältemittelventils 14a fluidtechnisch von einem Ausgang 82a des als Absperrventil ausgebildeten ersten Kältemittelventils 14a getrennt. Wenn das Schieberelement 94a von dem Dichtsitz 102a des ersten Kältemittelventils 14a abgehoben ist, sind Eingang 88a und Ausgang 82a des ersten Kältemittelventils 14a miteinander fluidtechnisch verbunden (vgl. Fig. 4c). Das erste Vorsteuerventil 20a ist mit dem ersten Kältemittelventil 14a über einen Steuerkanal 44a fluidtechnisch verbunden. Der Steuerkanal 44a ist als eine Ausnehmung / Bohrung in einem Grundkörper 78a des Ventilblock 26a ausgebildet. Der Steuerkanal 44a verbindet die erste Druckseite 80a des Ventilelements 50a des ersten Vorsteuerventils 20a mit einem Ausgang 82a des als Absperrventil ausgebildeten ersten Kältemittelventil 14a. Die Flussrichtung des Kältemittels durch das erste Kältemittelventil 14a in dem geöffneten Zustand ist durch einen Pfeil 84a angedeutet. In der Schaltstellung der Figur 4b ist das erste Kältemittelventil 14a so geschaltet, dass der Ausgang 82a des ersten Kältemittelventils 14a von einem Eingang 88a des ersten Kältemittelventils 14a fluidtechnisch getrennt ist, wodurch an der ersten Druckseite 80a des Ventilelements 50a des ersten Vorsteuerventils 20a der im Vergleich zu dem an dem Eingang 88a des ersten Kältemittelventils 14a anliegenden Druck niedrigere Druck des Ausgangs 82a des ersten Kältemittelventils 14a anliegt. Das erste Vorsteuerventil 20a ist mit dem ersten Kältemittelventil 14a über einen weiteren Steuerkanal 54a fluidtechnisch verbunden. Der weitere Steuerkanal 54a ist ebenfalls als eine Ausnehmung / Bohrung in dem Grundkörper 78a des Ventilblocks 26a ausgebildet. Der weitere Steuerkanal 54a verbindet die der ersten Druckseite 80a des Ventilelements 50a gegenüberliegende zweite Druckseite 90a des Ventilelements 50a des ersten Vorsteuerventils 20a mit der zweiten Druckwirkfläche 106a des Schieberelements 94a des ersten Kältemittelventils 14a. Da durch die Leckage 114a in dem geschlossenen Zustand der Fig. 4b an der zweiten Druckwirkfläche 106a des Schieberelements 94a derselbe Druck anliegt wie an dem Eingang 88a des ersten Kältemittelventils 14a liegt dadurch an der zweiten Druckseite 90a des Ventilelements 50a des ersten Vorsteuerventils 20a ebenfalls derselbe Druck wie am Eingang 88a des ersten Kältemittelventils 14a an. Folglich ist in dem geschlossenen Zustand der Figur 4b der Druck auf der zweiten Druckseite 90a des Ventilelements 50a (Eingangsdruck) größer als auf der ersten Druckseite 80a des Ventilelements 50a (Ausgangsdruck). Dies wird in der Fig. 4b durch den Pfeil 92a angedeutet.

Wenn die Nocke 40a des Nockenrings 36a der Nockenwelle 18a nun das Übertragungselement 48a anhebt, so dass das Ventilelement 50a des ersten Vorsteuerventils 20a von dem Dichtsitz 96a angehoben wird, wird der Druck des Ausgangs 82a des ersten Kältemittelventils 14a über die beiden Steuerkanäle 44a, 54a an die zweite Druckwirkfläche 106a des Schieberelements 94a angelegt. Dadurch ist der Druck an der zweiten Druckwirkfläche 106a des Schieberelements 94a kleiner als der Druck an der ersten Druckwirkfläche 104a des Schieberelements 94a (Eingangsdruck) und das Schieberelement 94a wird von dem Dichtsitz 102a angehoben. Der geöffnete Zustand des als Absperrventil ausgebildeten ersten Kältemittelventils 14a stellt so ein, wie es in der Fig. 4c dargestellt ist. Der geöffnete Zustand hält so lange an, so lange die Nocke 40a das Ventilelement 50a des ersten Vorsteuerventils 20a offen hält.

Jedes der Vorsteuerventile 20a, 30a der Ventilsteuereinheit 16a ist mit dem jeweiligen zugehörigen Kältemittelventil 14a, 24a über die Steuerkanäle 44a, 54a fluidtechnisch verbunden. Jedes Vorsteuerventil 20a, 30a weist jeweils ein Übertragungselement 48a aufweist, welches dazu vorgesehen ist, ein zu dem Vorsteuerventils 20a, 30a zugehöriges Nockenwellensignal mechanisch an das jeweilige Ventilelement 50a des jeweiligen Vorsteuerventils 20a, 30a zu übertragen.

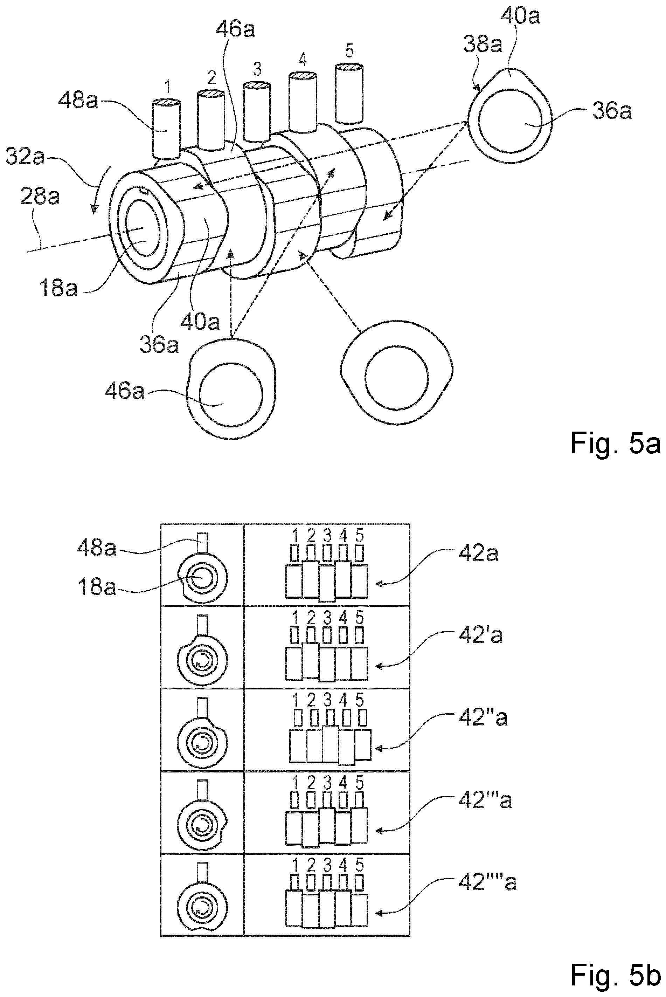

Die Figur 5a zeigt eine schematische Darstellung der Nockenwelle 18a mit jeweils zugeordneten Übertragungselementen 48a von Vorsteuerventilen 20a, 30a.

Alternativ könnten die Übertragungselemente 48a auch direkt Kältemittelventilen 14a, 24a zugeordnet sein. Die Nockenwelle 18a weist eine Mehrzahl an Nockenringen 36a, 46a auf. Im in der Fig. 5 dargestellten Beispiel umfasst die Nockenwelle 18a fünf Nockenringe 36a, 46a. Die Nockenringe 36a, 46a sind jeweils zu einer Ansteuerung eines Übertragungselements 48a eines der Kältemittelventile 14a, 24a oder eines der Vorsteuerventile 20a, 30a vorgesehen. Die Nockenringe 36a, 46a weisen jeweils Nocken 40a, 40'a, 40"a auf. Die Nocken 40a, 40'a, 40"a können zueinander unterschiedlich ausgebildet sein. Beispielsweise kann eine Nocke 40a eine flache Rampe 38a ausbilden. Die Anordnung der Nockenringe 36a, 46a an der Nockenwelle 18a bildet eine Mehrzahl an spezifischen Schaltbildern 42a, 42'a, 42"a, 42"'a, 42""a zu einer Schaltung verschiedener Betriebszustände des Kältemittelkreislaufs 10a aus (vgl. Fig. 5b). Je nach Drehstellung der Nockenwelle 18a werden unterschiedliche Kombinationen von Übertragungselementen 48a durch die Nockenwelle 18a angehoben / aktiviert. Bei der in der Fig. 5b beispielhaft gezeigten Ausgestaltung mit fünf Schaltbildern 42a, 42'a, 42"a, 42"'a, 42""a könnte eine Drehung der Nockenwelle 18a um jeweils etwa 72° ein Umschalten zwischen den einzelnen aufeinanderfolgenden Schaltbildern 42a, 42'a, 42"a, 42"'a, 42""a bewirken.

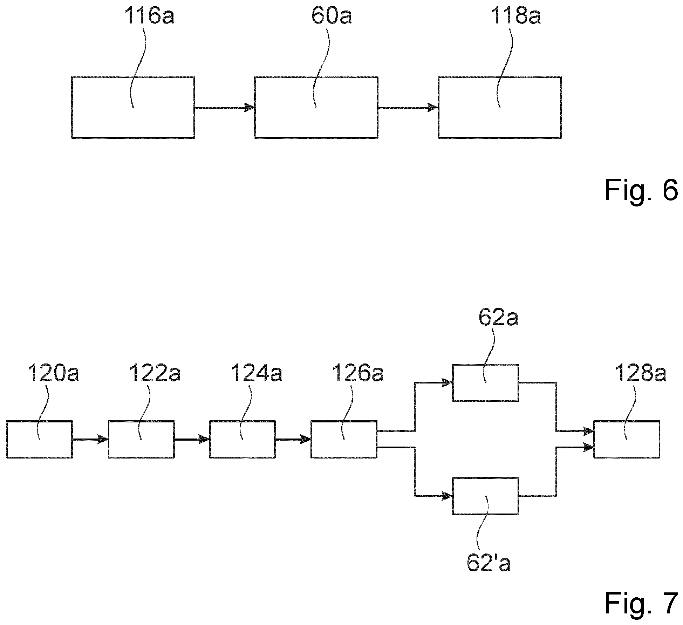

Die Figur 6 zeigt ein schematisches Ablaufdiagramm eines Verfahrens zu einem Betrieb des Kältemittelkreislaufs 10a. In zumindest einem Betriebsschritt 116a wird ein geänderter Betriebsparameter an der Klimaanlage 68a oder an der Wärmepumpe 58a mit dem Ziel einer Einstellung eines gewünschten Betriebszustands der Klimaanlage 68a oder der Wärmepumpe 58a eingestellt. In zumindest einem weiteren Betriebsschritt 60a wird die Elektromotoreinheit 22a so angesteuert, dass die Nockenwelle 18a eine für den neuen Betriebsparameter vorgesehene Rotationsstellung 98a, 100a einnimmt. Dadurch wird eines von mehreren möglichen spezifischen Schaltbildern 42a, 42'a, 42"a, 42‴a, 42""a eingestellt. In dem weiteren Betriebsschritt 60a wird die gezielt ansteuerbare Nockenwelle 18a zur Ansteuerung der Mehrzahl an in dem gemeinsamen Ventilblock 26a integrierten Vorsteuerventilen 20a, 30a zur Vorsteuerung der in dem gemeinsamen Ventilblock 26a integrierten Kältemittelventile 14a, 24a verwendet. Alternativ oder zusätzlich könnte die gezielt ansteuerbare Nockenwelle 18a in dem Betriebsschritt 60a auch zur Ansteuerung der Mehrzahl an in dem gemeinsamen Ventilblock 26a integrierten Kältemittelventilen 14a, 24a verwendet werden. In zumindest einem weiteren Betriebsschritt 118a nimmt die Klimaanlage 68a oder die Wärmepumpe 58a den gewünschten Betriebszustand an.

Die Figur 7 zeigt ein schematisches Ablaufdiagramm eines Verfahrens zu einer Herstellung des Ventilblocks 26a. In zumindest einem Herstellungsschritt 120a werden mehrere Kältemittelventile 14a, 24a in ein Kältemittelventilmodul 74a integriert. In zumindest einem weiteren Herstellungsschritt 122a werden mehrere Vorsteuerventile 20a, 30a in ein Steuermodul 76a integriert. In zumindest einem weiteren Herstellungsschritt 124a wird die Nockenwelle 18a in das Steuermodul 76a integriert. In zumindest einem weiteren Herstellungsschritt 126a wird die Elektromotoreinheit 22a an das Steuermodul 76a montiert. In zumindest einem weiteren Herstellungsschritt 62a werden die mehreren Kältemittelventile 14a, 24a und die mehreren Vorsteuerventile 20a, 30a durch eine Verbindung des Kältemittelventilmoduls 74a mit dem Steuermodul 76a in den gemeinsamen Ventilblock 26a integriert. Alternativ könnte in einem dazu alternativen Herstellungsschritt 62'a die Integration der Kältemittelventile 14a, 24a und der Vorsteuerventile 20a, 30a auch direkt in ein einzelnes Bauteil vorgenommen werden. In zumindest einem weiteren Herstellungsschritt 128a wird der gemeinsame Ventilblock 26a in einen Kältemittelkreislauf 10a, z.B. der Klimaanlage 68a oder der Wärmepumpe 58a, eingebaut.

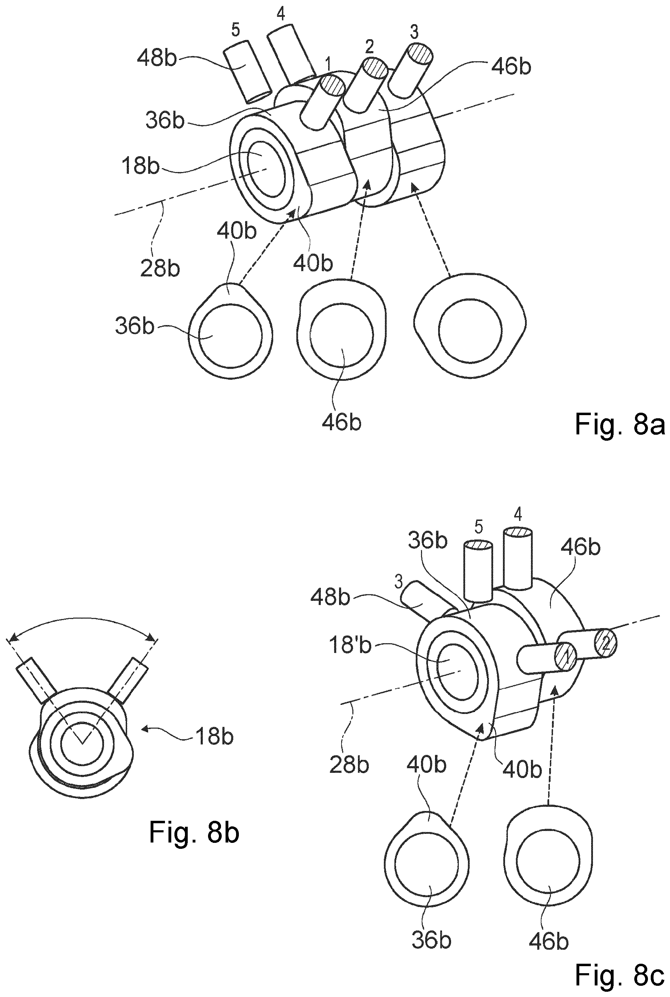

In den Figuren 8a bis 8c ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 7, verwiesen werden kann. Zur Unterscheidung der Ausführungsbeispiele ist der Buchstabe a den Bezugszeichen des Ausführungsbeispiels in den Figuren 1 bis 7 nachgestellt. In den Ausführungsbeispielen der Figuren 8a bis 8c ist der Buchstabe a durch den Buchstaben b ersetzt.

Die Figuren 8a, 8b und 8c zeigen schematisch verschiedene Ansichten alternativer Nockenwellen 18b, 18'b einer alternativen Ventilsteuereinheit 16b eines alternativen Ventilblocks 26b. Die alternative Ventilsteuereinheit 16b weist mehrere Vorsteuerventile 20b, 30b auf. Der alternative Ventilblock 26b weist eine Kältemittelventileinheit 12b mit mehreren Kältemittelventilen 14b, 24b auf. Die Vorsteuerventile 20b, 30b oder alternativ die Kältemittelventile 14b, 24b sind in Umfangrichtung 32b der alternativen Nockenwellen 18b, 18'b um eine Rotationsachse 28b der alternativen Nockenwellen 18b, 18'b herum angeordnet. Die alternativen Nockenwellen 18b, 18'b weisen dabei jeweils eine Anzahl an Nockenringen 36b, 46b auf, welche kleiner ist als eine Anzahl an Vorsteuerventilen 20b, 30b die von den alternativen Nockenwellen 18b, 18'b angesteuert werden. Im Fall einer direkten Ansteuerung der Kältemittelventile 14b, 24b durch die alternativen Nockenwellen 18b, 18'b wäre dann die Anzahl an Nockenringen 36b, 46b der alternativen Nockenwellen 18b, 18'b auch kleiner als eine Anzahl an Kältemittelventilen 14b, 24b die von den alternativen Nockenwellen 18b, 18'b angesteuert werden.

Die alternative Nockenwelle 18b der Figuren 8a und 8b weist drei Nockenringe 36b, 46b auf, welche fünf Übertragungselemente 48b von Vorsteuerventilen 20b, 30b oder Kältemittelventilen 14b, 24b ansteuern. Die alternative Nockenwelle 18'b der Figur 8c weist zwei Nockenringe 36b, 46b auf, welche ebenfalls fünf Übertragungselemente 48b von Vorsteuerventilen 20b, 30b oder Kältemittelventilen 14b, 24b ansteuern. In beiden Fällen weist die alternative Nockenwelle 18b, 18'b einen Nockenring 46b auf, welcher zu einer Ansteuerung von Übertragungselementen 48b von zwei unterschiedlichen Vorsteuerventilen 20b, 30b oder von zwei unterschiedlichen Kältemittelventilen 14b, 24b vorgesehen ist.

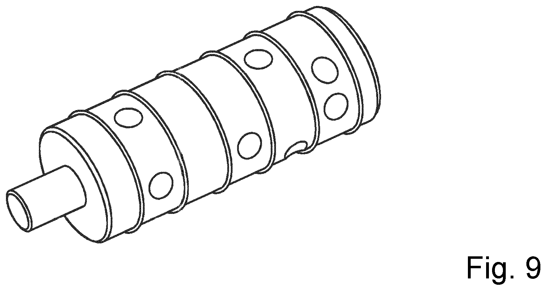

Die Figur 9 zeigt eine nicht erfindungsgemäße Integration der Funktion mehrerer Absperrventile in einen einzelnen Drehkörper.

### Bezugszeichen

- 10: Kältemittelkreislauf
- 12: Kältemittelventileinheit
- 14: Kältemittelventil
- 16: Ventilsteuereinheit
- 18: Nockenwelle
- 20: Vorsteuerventil
- 22: Elektromotoreinheit
- 24: Kältemittelventil
- 26: Ventilblock
- 28: Rotationsachse
- 30: Vorsteuerventil
- 32: Umfangrichtung
- 34: Kältemittelventil
- 36: Nockenring
- 38: Rampe
- 40: Nocke
- 42: Schaltbild
- 44: Steuerkanal
- 46: Nockenring
- 48: Übertragungselement
- 50: Ventilelement
- 52: Druck-/Temperatursensor
- 54: Steuerkanal
- 56: Fahrzeug
- 58: Wärmepumpe
- 60: Betriebsschritt
- 62: Herstellungsschritt
- 64: Passagierraum
- 66: Gebäude
- 68: Klimaanlage
- 70: Anschluss
- 72: Elektromagnet
- 74: Kältemittelventilmodul
- 76: Steuermodul
- 78: Grundkörper
- 80: Druckseite
- 82: Ausgang
- 84: Pfeil
- 86: Rückstelleinheit
- 88: Eingang
- 90: Druckseite
- 92: Pfeil
- 94: Schieberelement
- 96: Dichtsitz
- 98: Rotationsstellung
- 100: Rotationsstellung
- 102: Dichtsitz
- 104: Druckwirkfläche
- 106: Druckwirkfläche
- 108: Dichtfläche
- 110: Pfeil
- 112: Rückstelleinheit
- 114: Leckage
- 116: Betriebsschritt
- 118: Betriebsschritt
- 120: Herstellungsschritt
- 122: Herstellungsschritt
- 124: Herstellungsschritt
- 126: Herstellungsschritt
- 128: Herstellungsschritt
- 130: Rillenkugellager
- A: Schnittachse
- B: Schnittachse

## Patentansprüche

1. Ventilblock (26a-b) für einen Kältemittelkreislauf (10a-b), mit zumindest einer Kältemittelventileinheit (12a-b), aufweisend zumindest ein erstes Kältemittelventil (14a-b) und zumindest ein zweites Kältemittelventil (24ab), welche jeweils zumindest dazu vorgesehen sind, einen Kältemittelfluss des Kältemittelkreislaufs (10a-b) zu beeinflussen, und **gekennzeichnet durch** eine zumindest ein erstes Vorsteuerventil (20a-b) und zumindest ein zweites Vorsteuerventil (30a-b) aufweisende Ventilsteuereinheit (16a-b), welche zumindest dazu vorgesehen ist, zumindest einen Teil der Kältemittelventile (14a-b, 24a-b) der Kältemittelventileinheit (12a-b) zu steuern und/oder vorzusteuern, wobei die Ventilsteuereinheit (16a-b) eine gezielt ansteuerbare Nockenwelle (18a-b) zur Ansteuerung mehrerer Kältemittelventile (14a-b, 24a-b) und/oder der Vorsteuerventile (20ab, 30a-b) der Ventilsteuereinheit (16a-b), insbesondere zumindest des ersten Vorsteuerventils (20a-b) der Ventilsteuereinheit (16a-b) zu einer Vorsteuerung des ersten Kältemittelventils (14a-b) und zumindest des zweiten Vorsteuerventils (30a-b) der Ventilsteuereinheit (16a-b) zu einer Vorsteuerung des zweiten Kältemittelventils (24a-b), aufweist,
wobei jedes Vorsteuerventil (20a-b, 30a-b) der Ventilsteuereinheit (16a-b) mit dem jeweiligen zugehörigen Kältemittelventil (14a-b, 24a-b) zumindest über einen Steuerkanal (44a-b) verbunden ist,
wobei jedes Vorsteuerventil (20a-b, 30a-b) der Ventilsteuereinheit (16a-b) mit demselben jeweiligen zugehörigen Kältemittelventil (14a-b, 24a-b) zumindest über einen weiteren Steuerkanal (54a-b) verbunden ist,
wobei der Ventilblock (26a-b) ein Kältemittelventilmodul (74a-b) umfasst, in welchem alle die Kältemittelventile (14a-b, 24a-b) des Ventilblocks (26ab) angeordnet sind,
wobei der Ventilblock (26a-b) ein Steuermodul (76a-b) umfasst, in welchem alle die Vorsteuerventile (20a-b, 30a-b) des Ventilblocks (26a-b) angeordnet sind, und
wobei das Steuermodul (76a-b) und das Kältemittelventilmodul (74a-b) miteinander verbunden sind und dadurch den Ventilblock (26a-b) ausbilden.

2. Ventilblock (26a-b) nach Anspruch 1, **dadurch gekennzeichnet, dass** die Ventilsteuereinheit (16a-b) zumindest eine Elektromotoreinheit (22a-b), insbesondere mit zumindest einem Schrittmotor, zu einem winkelgesteuerten Antrieb der Nockenwelle (18a-b) aufweist.

3. Ventilblock (26a-b) nach Anspruch 1 oder 2, **dadurch gekennzeichnet, dass** die Nockenwelle (18a-b) zu einer Ansteuerung von mehr als zwei, vorzugsweise von mehr als drei und bevorzugt von mehr als vier Kältemittelventilen (14a-b, 24a-b) der Kältemittelventileinheit (12a-b) oder Vorsteuerventilen (20a-b, 30a-b) der Ventilsteuereinheit (16a-b) ausgebildet ist.

4. Ventilblock (26a-b) nach einem der vorhergehenden Ansprüche, **dadurch gekennzeichnet, dass** sämtliche Kältemittelventile (14a-b, 24a-b) eines funktionsfähigen Kältemittelkreislaufs (10a-b) in dem Ventilblock (26a-b) integriert sind.

5. Ventilblock (26a-b) nach einem der vorhergehenden Ansprüche, insbesondere nach Anspruch 3 oder 4, **dadurch gekennzeichnet, dass** die Vorsteuerventile (20a-b, 30a-b) der Ventilsteuereinheit (16a-b) oder die Kältemittelventile (14a-b, 24a-b) der Kältemittelventileinheit (12a-b) in einer Reihe parallel zu einer Rotationsachse (28a-b) der Nockenwelle (18a-b) und/oder in Umfangrichtung (32b) der Nockenwelle (18b) um die Rotationsachse (28b) der Nockenwelle (18b) herum angeordnet sind.

6. Ventilblock (26a-b) nach einem der vorhergehenden Ansprüche, **dadurch gekennzeichnet, dass** das erste Kältemittelventil (14a-b) und/oder das zweite Kältemittelventil (24a-b) als ein Absperrventil zu einem Sperren des Kältemittelflusses zumindest in einem Teilbereich des Kältemittelkreislaufs (10a-b) ausgebildet ist, und/oder **dadurch gekennzeichnet, dass** das erste Kältemittelventil (14a-b), das zweite Kältemittelventil (24a-b) und/oder zumindest ein separat angesteuertes drittes Kältemittelventil (34a-b) der Kältemittelventileinheit (12a-b) als Expansionsventil des Kältemittelkreislaufs (10a-b) ausgebildet ist/sind.

7. Ventilblock (26a-b) nach Anspruch 6, **dadurch gekennzeichnet, dass** die Nockenwelle (18a-b) zumindest einen Nockenring (36a-b) mit einer eine flache Rampe (38a-b) ausbildenden Nocke (40a-b) aufweist.

8. Ventilblock (26a-b) nach einem der vorhergehenden Ansprüche, **dadurch gekennzeichnet, dass** die Nockenwelle (18a-b) eine Mehrzahl an Nockenringen (36a-b, 46a-b) aufweist, welche jeweils zumindest zu einer Ansteuerung zumindest eines Kältemittelventils (14a-b, 24a-b) oder zumindest eines Vorsteuerventils (20a-b, 30a-b) vorgesehen sind, wobei die Anordnung der Nockenringe (36a-b, 46a-b) an der Nockenwelle (18ab) eine Mehrzahl an spezifischen Schaltbildern (42a-b, 42'a-b, 42"a-b, 42‴a-b, 42ʺʺa-b) zu einer Schaltung verschiedener Betriebszustände des Kältemittelkreislaufs (10a-b) ausbildet.

9. Ventilblock (26b) nach einem der vorhergehenden Ansprüche, **dadurch gekennzeichnet, dass** die Nockenwelle (18b) eine Anzahl an Nockenringen (36b, 46b) aufweist, welche kleiner ist als eine Anzahl an Vorsteuerventilen (20b, 30b) der Ventilsteuereinheit (16b), die von der Nockenwelle (18b) angesteuert werden, oder als eine Anzahl an Kältemittelventilen (14b, 24b) der Kältemittelventileinheit (12b), die von der Nockenwelle (18b) angesteuert werden.

10. Ventilblock (26b) nach einem der vorhergehenden Ansprüche, **dadurch gekennzeichnet, dass** die Nockenwelle (18b) einen Nockenring (46b) aufweist, welcher zu einer Ansteuerung von zwei oder mehr unterschiedlichen Vorsteuerventilen (20b, 30b) oder von zwei oder mehr unterschiedlichen Kältemittelventilen (14b, 24b) vorgesehen ist.

11. Ventilblock (26a-b) nach einem der vorhergehenden Ansprüche, **dadurch gekennzeichnet, dass** jedes Vorsteuerventil (20a-b, 30a-b) zumindest ein Übertragungselement (48a-b) aufweist, welches dazu vorgesehen ist, ein Nockenwellensignal mechanisch an ein Ventilelement (50a-b) des jeweiligen Vorsteuerventils (20a-b, 30a-b) zu übertragen.

12. Ventilblock (26a-b) nach einem der vorhergehenden Ansprüche, **dadurch gekennzeichnet, dass** die Vorsteuerventile (20a-b, 30a-b) als Normally-Closed-Ventile ausgebildet sind.

13. Ventilblock (26a-b) nach einem der vorhergehenden Ansprüche,
**gekennzeichnet durch** zumindest einen integrierten Druck-/Temperatursensor (52a-b).

14. Kältemittelkreislauf (10a-b), insbesondere in einem Fahrzeug (56a-b), vorzugsweise in einem batterieelektrisch betriebenen Fahrzeug, und/oder in einer Wärmepumpe (58a-b), vorzugsweise einer Gebäudewärmepumpe, aufweisend einen Ventilblock (26a-b) nach einem der vorhergehenden Ansprüche.

15. Verfahren zu einem Betrieb eines Kältemittelkreislaufs (10a-b) nach Anspruch 14, **dadurch gekennzeichnet, dass** in zumindest einem Betriebsschritt (60a-b) eine gezielt ansteuerbare Nockenwelle (18a-b) zur Ansteuerung von mehreren in einen gemeinsamen Ventilblock (26a-b) integrierten Kältemittelventilen (14a-b, 24a-b) und/oder von mehreren in den gemeinsamen Ventilblock (26a-b) integrierten Vorsteuerventilen (20ab, 30a-b) zur Vorsteuerung von in den gemeinsamen Ventilblock (26a-b) integrierten Kältemittelventilen (14a-b, 24a-b) verwendet wird.

16. Verfahren zu einer Herstellung eines Ventilblocks (26a-b) nach einem der Ansprüche 1 bis 13, **dadurch gekennzeichnet, dass** in zumindest einem Herstellungsschritt (62a-b, 62'a-b) mehrere Kältemittelventile (14a-b, 24ab) und vorzugsweise mehrere Vorsteuerventile (20a-b, 30a-b) zur Vorsteuerung der Kältemittelventile (14a-b, 24a-b), in einen gemeinsamen Ventilblock (26a-b) integriert werden.

## Claims

1. A valve block (26a-b) for a refrigerant circuit (10a-b), comprising at least one refrigerant valve unit (12a-b) having at least one first refrigerant valve (14a-b) and at least one second refrigerant valve (24a-b) which are each configured at least to influence a refrigerant flow of the refrigerant circuit (10a-b), and **characterized by** a valve control unit (16a-b) which comprises at least one first pilot valve (20a-b) and at least one second pilot valve (30a-b) and which is configured at least to control and/or to pilot at least some of the refrigerant valves (14a-b, 24a-b) of the refrigerant valve unit (12a-b), wherein the valve control unit (16a-b) has a specifically actuatable camshaft (18a-b) for actuating a plurality of refrigerant valves (14a-b, 24a-b) and/or of the pilot valves (20a-b, 30a-b) of the valve control unit (16a-b), in particular at least of the first pilot valve (20a-b) of the valve control unit (16a-b) to pilot the first refrigerant valve (14a-b) and at least of the second pilot valve (30a-b) of the valve control unit (16a-b) to pilot the second refrigerant valve (24a-b),
wherein each pilot valve (20a-b, 30a-b) of the valve control unit (16a-b) is connected to the respective associated refrigerant valve (14a-b, 24a-b) at least via a control channel (44a-b),
wherein each pilot valve (20a-b, 30a-b) of the valve control unit (16a-b) is connected to the same respective associated refrigerant valve (14a-b, 24a-b) at least via a further control channel (54a-b),
wherein the valve block (26a-b) comprises a refrigerant valve module (74a-b) in which all the refrigerant valves (14a-b, 24a-b) of the valve block (26a-b) are arranged,
wherein the valve block (26a-b) comprises a control module (76a-b), in which all of the pilot valves (20a-b, 30a-b) of the valve block (26a-b) are arranged, and
wherein the control module (76a-b) and the refrigerant valve module (74a-b) are connected together and form the valve block (26a-b) as a result.

2. The valve block (26a-b) according to claim 1, **characterized in that** the valve control unit (16a-b) comprises at least one electric motor unit (22a-b), in particular having at least one stepping motor, to drive the camshaft (18a-b) in an angle-controlled manner.

3. The valve block (26a-b) according to claim 1 or 2, **characterized in that** the camshaft (18a-b) is formed to actuate more than two, preferably more than three and preferentially more than four refrigerant valves (14a-b, 24a-b) of the refrigerant valve unit (12a-b) or pilot valves (20a-b, 30a-b) of the valve control unit (16a-b).

4. The valve block (26a-b) according to any one of the preceding claims, **characterized in that** all of the refrigerant valves (14a-b, 24a-b) of a functional refrigerant circuit (10a-b) are integrated in the valve block (26a-b).

5. The valve block (26a-b) according to any one of the preceding claims, in particular according to claim 3 or 4, **characterized in that** the pilot valves (20a-b, 30a-b) of the valve control unit (16a-b) or the refrigerant valves (14a-b, 24a-b) of the refrigerant valve unit (12a-b) are arranged in a row parallel to an axis of rotation (28a-b) of the camshaft (18a-b) and/or in circumferential direction (32b) of the camshaft (18b) around the axis of rotation (28b) of the camshaft (18b).

6. The valve block (26a-b) according to any one of the preceding claims,
**characterized in that** the first refrigerant valve (14a-b) and/or the second refrigerant valve (24a-b) is/are formed as a shut-off valve to block a refrigerant flow at least in a subregion of the refrigerant circuit (10a-b), and/or **characterized in that** the first refrigerant valve (14a-b), the second refrigerant valve (24a-b) and/or at least one separately actuated third refrigerant valve (34a-b) of the refrigerant valve unit (12a-b) is/are formed as expansion valve of the refrigerant circuit (10a-b).

7. The valve block (26a-b) according to claim 6, **characterized in that** the camshaft (18a-b) comprises at least one cam ring (36a-b) having a cam (40a-b) which forms a flat ramp (38a-b).

8. The valve block (26a-b) according to any one of the preceding claims, **characterized in that** the camshaft (18a-b) has a plurality of cam rings (36a-b, 46a-b), which are each configured at least to actuate at least one refrigerant valve (14a-b, 24a-b) or at least one pilot valve (20a-b, 30a-b), wherein the arrangement of the cam rings (36a-b, 46a-b) on the camshaft (18a-b) forms a plurality of specific switching patterns (42a-b, 42'a-b, 42"a-b, 42‴a-b, 42""a-b) for switching different operation states of the refrigerant circuit (10a-b).

9. The valve block (26b) according to any one of the preceding claims,
**characterized in that** the camshaft (18b) has a number of camrings (36b, 46b) which is less than a number of pilot valves (20b, 30b) of the valve control unit (16b) which are actuated by the camshaft (18b), or than a number of refrigerant valves (14b, 24b) of the refrigerant valve unit (12b) which are actuated by the camshaft (18b).

10. The valve block (26b) according to any one of the preceding claims,
**characterized in that** the camshaft (18b) has a cam ring (46b) which is configured to actuate two or more different pilot valves (20b, 30b) or two or more different refrigerant valves (14b, 24b).

11. The valve block (26a-b) according to any one of the preceding claims,
**characterized in that** each pilot valve (20a-b, 30a-b) has at least one transmission element (48a-b) which is configured to transmit a camshaft signal mechanically to a valve element (50a-b) of the respective pilot valve (20a-b, 30a-b).

12. The valve block (26a-b) according to any one of the preceding claims,
**characterized in that** the pilot valves (20a-b, 30a-b) are realized as normally-closed valves.

13. The valve block (26a-b) according to any one of the preceding claims,
**characterized by** at least one integrated pressure/temperature sensor (52a-b).

14. A refrigerant circuit (10a-b), in particular in a vehicle (56a-b), preferably in a battery-electrically driven vehicle, and/or in a heat pump (58a-b), preferably a building heat pump, having a valve block (26a-b) according to any one of the preceding claims.

15. A method for operating a refrigerant circuit (10a-b) according to claim 14, **characterized in that** in at least one operating step (60a-b) a specifically actuatable camshaft (18a-b) is used to actuate a plurality of refrigerant valves (14a-b, 24a-b) which are integrated in a common valve block (26a-b) and/or a plurality of pilot valves (20a-b, 30a-b) which are integrated in the common valve block (26a-b) in order to pilot refrigerant valves (14a-b, 24a-b) which are integrated in the common valve block (26a-b).

16. The method for producing a valve block (26a-b) according to any one of claims 1 to 13, **characterized in that** in at least one production step (62a-b, 62'a-b) a plurality of refrigerant valves (14a-b, 24a-b) and preferably a plurality of pilot valves (20a-b, 30a-b) for piloting the refrigerant valves (14a-b, 24a-b) are integrated into a common valve block (26a-b).

## Revendications

1. Bloc de soupapes (26a-b) pour un circuit de fluide frigorigène (10a-b), comprenant au moins une unité de soupape de fluide frigorigène (12a-b), présentant au moins une première soupape de fluide frigorigène (14a-b) et au moins une deuxième soupape de fluide frigorigène (24a-b), qui sont respectivement prévues au moins pour influencer un flux de fluide frigorigène du circuit de fluide frigorigène (10a-b), et **caractérisé par** une unité de commande de soupape (16a-b) présentant au moins une première soupape pilote (20a-b) et au moins une deuxième soupape pilote (30a-b), qui est prévue au moins pour commander et/ou piloter au moins une partie des soupapes de fluide frigorigène (14a-b, 24a-b) de l'unité de soupape de fluide frigorigène (12a-b), l'unité de commande de soupape (16a-b) présentant un arbre à cames (18a-b) pouvant être commandé de manière ciblée pour commander plusieurs soupapes de fluide frigorigène (14a-b, 24a-b) et/ou les soupapes pilotes (20a-b, 30a-b) de l'unité de commande de soupape (16a-b), en particulier au moins la première soupape pilote (20a-b) de l'unité de commande de soupape (16a-b) pour piloter la première soupape de fluide frigorigène (14a-b) et au moins la deuxième soupape pilote (30a-b) de l'unité de commande de soupape (16a-b) pour piloter la deuxième soupape de fluide frigorigène (24a-b), chaque soupape pilote (20a-b, 30a-b) de l'unité de commande de soupape (16a-b) étant connectée à la soupape de fluide frigorigène (14a-b, 24a-b) associée respective au moins par le biais d'un canal de commande (44a-b),
chaque soupape pilote (20a-b, 30a-b) de l'unité de commande de soupape (16a-b) étant connectée à la même soupape de fluide frigorigène (14a-b, 24a-b) associée respective au moins par le biais d'un canal de commande supplémentaire (54a-b),
le bloc de soupapes (26a-b) comprenant un module de soupape de fluide frigorigène (74a-b) dans lequel sont disposées toutes les soupapes de fluide frigorigène (14a-b, 24a-b) du bloc de soupapes (26a-b),
le bloc de soupapes (26a-b) comprenant un module de commande (76a-b) dans lequel sont disposées toutes les soupapes pilotes (20a-b, 30a-b) du bloc de soupapes (26a-b), et
le module de commande (76a-b) et le module de soupape de fluide frigorigène (74a-b) étant connectés l'un à l'autre et formant ainsi le bloc de soupapes (26a-b).

2. Bloc de soupapes (26a-b) selon la revendication 1, **caractérisé en ce que** l'unité de commande de soupape (16a-b) présente au moins une unité de moteur électrique (22a-b), en particulier avec au moins un moteur pas à pas, pour un entraînement à commande angulaire de l'arbre à cames (18a-b).

3. Bloc de soupapes (26a-b) selon la revendication 1 ou 2, **caractérisé en ce que** l'arbre à cames (18a-b) est réalisé pour une commande de plus de deux, de préférence de plus de trois et de préférence de plus de quatre soupapes de fluide frigorigène (14a-b, 24a-b) de l'unité de soupape de fluide frigorigène (12a-b) ou soupapes pilotes (20a-b, 30a-b) de l'unité de commande de soupape (16a-b).

4. Bloc de soupapes (26a-b) selon l'une quelconque des revendications précédentes, **caractérisé en ce que** toutes les soupapes de fluide frigorigène (14a-b, 24a-b) d'un circuit de fluide frigorigène (10a-b) fonctionnel sont intégrées dans le bloc de soupapes (26a-b).

5. Bloc de soupapes (26a-b) selon l'une quelconque des revendications précédentes, en particulier selon la revendication 3 ou 4, **caractérisé en ce que** les soupapes pilotes (20a-b, 30a-b) de l'unité de commande de soupape (16a-b) ou les soupapes de fluide frigorigène (14a-b, 24a-b) de l'unité de soupape de fluide frigorigène (12a-b) sont disposées en une rangée parallèlement à un axe de rotation (28a-b) de l'arbre à cames (18a-b) et/ou dans la direction périphérique (32b) de l'arbre à cames (18b) autour de l'axe de rotation (28b) de l'arbre à cames (18b).

6. Bloc de soupapes (26a-b) selon l'une quelconque des revendications précédentes, **caractérisé en ce que** la première soupape de fluide frigorigène (14a-b) et/ou la deuxième soupape de fluide frigorigène (24a-b) est réalisée sous forme de soupape d'arrêt pour un blocage du flux de fluide frigorigène au moins dans une région partielle du circuit de fluide frigorigène (10a-b), et/ou **caractérisé en ce que** la première soupape de fluide frigorigène (14a-b), la deuxième soupape de fluide frigorigène (24a-b) et/ou au moins une troisième soupape de fluide frigorigène (34a-b) commandée séparément de l'unité de soupape de fluide frigorigène (12a-b) est/sont réalisée(s) sous forme de soupape d'expansion du circuit de fluide frigorigène (10a-b).

7. Bloc de soupapes (26a-b) selon la revendication 6, **caractérisé en ce que** l'arbre à cames (18a-b) présente au moins une bague de came (36a-b) avec une came (40a-b) réalisant une rampe plate (38a-b).

8. Bloc de soupapes (26a-b) selon l'une quelconque des revendications précédentes, **caractérisé en ce que** l'arbre à cames (18a-b) présente une pluralité de bagues de came (36a-b, 46a-b), qui sont respectivement prévues au moins pour une commande d'au moins une soupape de fluide frigorigène (14a-b, 24a-b) ou d'au moins une soupape pilote (20a-b, 30a-b), l'agencement des bagues de came (36a-b, 46a-b) sur l'arbre à cames (18a-b) réalisant une pluralité de circuits de commutation spécifiques (42a-b, 42'a-b, 42"a-b, 42"'a-b, 42""a-b) pour une commutation de différents états de fonctionnement du circuit de fluide frigorigène (10a-b).

9. Bloc de soupapes (26b) selon l'une quelconque des revendications précédentes, **caractérisé en ce que** l'arbre à cames (18b) présente un nombre de bagues de came (36b, 46b), qui est inférieur à un nombre de soupapes pilotes (20b, 30b) de l'unité de commande de soupape (16b), qui sont commandées par l'arbre à cames (18b), ou à un nombre de soupapes de fluide frigorigène (14b, 24b) de l'unité de soupape de fluide frigorigène (12b), qui sont commandées par l'arbre à cames (18b).

10. Bloc de soupapes (26b) selon l'une quelconque des revendications précédentes, **caractérisé en ce que** l'arbre à cames (18b) présente une bague de came (46b), qui est prévue pour une commande de deux soupapes pilotes (20b, 30b) différentes ou plus ou de deux soupapes de fluide frigorigène (14b, 24b) différentes ou plus.

11. Bloc de soupapes (26a-b) selon l'une quelconque des revendications précédentes, **caractérisé en ce que** chaque soupape pilote (20a-b, 30a-b) présente au moins un élément de transmission (48a-b), qui est prévu pour transmettre mécaniquement un signal d'arbre à cames à un élément de soupape (50a-b) de la soupape pilote (20a-b, 30a-b) respective.

12. Bloc de soupapes (26a-b) selon l'une quelconque des revendications précédentes, **caractérisé en ce que** les soupapes pilotes (20a-b, 30a-b) sont réalisées sous forme de soupapes normalement fermées.

13. Bloc de soupapes (26a-b) selon l'une quelconque des revendications précédentes, **caractérisé par** au moins un capteur de pression/température (52a-b) intégré.

14. Circuit de fluide frigorigène (10a-b), en particulier dans un véhicule (56a-b), de préférence dans un véhicule à fonctionnement électrique par batterie, et/ou dans une pompe à chaleur (58a-b), de préférence une pompe à chaleur de bâtiment, présentant un bloc de soupapes (26a-b) selon l'une quelconque des revendications précédentes.

15. Procédé pour un fonctionnement d'un circuit de fluide frigorigène (10a-b) selon la revendication 14, **caractérisé en ce que** dans au moins une étape de fonctionnement (60a-b), un arbre à cames (18a-b) pouvant être commandé de manière ciblée est utilisé pour commander plusieurs soupapes de fluide frigorigène (14a-b, 24a-b) intégrées dans un bloc de soupapes (26a-b) commun et/ou plusieurs soupapes pilotes (20a-b, 30a-b) intégrées dans le bloc de soupapes (26a-b) commun pour piloter des soupapes de fluide frigorigène (14a-b, 24a-b) intégrées dans le bloc de soupapes (26a-b) commun.

16. Procédé pour une fabrication d'un bloc de soupapes (26a-b) selon l'une quelconque des revendications 1 à 13, **caractérisé en ce que** dans au moins une étape de fabrication (62a-b, 62'a-b), plusieurs soupapes de fluide frigorigène (14a-b, 24a-b) et de préférence plusieurs soupapes pilotes (20a-b, 30a-b) pour piloter les soupapes de fluide frigorigène (14a-b, 24a-b) sont intégrées dans un bloc de soupapes (26a-b) commun.
